# FASCICULE DE BREVET EUROPEEN

(11) **EP 0 930 681 B1**
(45) Date de publication et mention de la délivrance du brevet: **25.04.2001**
(21) Numéro de dépôt: 98410147.7
(22) Date de dépôt: 15.12.1998
(51) Int. Cl.: H02B 11/133

(54) **Dispositif de verrouillage d'un mécanisme d'embrochage et de débrochage d'un disjoncteur**
Verriegelungsvorrichtung eines Mechanismus zum Schnappen und Trennen eines elektrischen Schalters
Locking device for snap and disconnecting mechanism of an electrical circuit breaker

(30) Priorité: 15.01.1998 FR 9800568
(43) Date de publication de la demande: 21.07.1999
(73) Titulaire: Schneider Electric Industries SA, 92500 Rueil-Malmaison (FR)
(72) Inventeur: Gerbert-Gaillard, Alain, 38050 Grenoble Cedex 09 (FR); Perroud, Michel, 38050 Grenoble Cedex 09 (FR)
(74) Mandataire: Ritzenthaler, Jacques

(56) Documents cités:
- US-A- 3 783 209

## Description

L'invention a trait à un mécanisme d'embrochage et de débrochage destiné à être commandé par un organe de manoeuvre, en particulier une manivelle, pour un appareillage de commutation à sectionnement par débrochage, notamment un disjoncteur débrochable, et plus particulièrement à son dispositif de verrouillage.

Le document EP-A-0 236 179 décrit un mécanisme réversible d'embrochage et de débrochage destiné à être commandé par une manivelle, pour un disjoncteur débrochable comportant des circuits principaux à sectionnement par débrochage et des circuits auxiliaires destinés à la commande électrique de l'appareillage, ces circuits auxiliaires devant être connectés avant l'embrochage des circuits principaux. Ce mécanisme comprend une chaîne cinématique de transmission susceptible d'amener le disjoncteur dans une pluralité d'états, à savoir: un état « embroché » dans lequel les circuits principaux et auxiliaires du disjoncteur sont connectés, un état intermédiaire de « test » dans lequel les circuits principaux sont déconnectés et les circuits auxiliaires sont connectés, et un état « débroché », dans lequel les circuits principaux et auxiliaires sont déconnectés. Cette chaîne cinématique comprend un arbre primaire rotatif dont une extrémité comporte des moyens de solidarisation à la manivelle. Le mécanisme comprend en outre un verrou principal apte à prendre une position fermée dans laquelle il interdit le montage de la manivelle sur l'arbre primaire et une position ouverte dans laquelle il autorise ce montage. Le verrou est rappelé vers sa position fermée par un ressort de rappel et comporte un doigt qui coopère avec une tige d'un indicateur rotatif de la position du mécanisme. Cette tige comporte une encoche d'indexation correspondant à l'état débroché du disjoncteur. Ainsi est constitué un organe de commande du verrou apte à prendre une information représentative d'un des états de la chaîne cinématique et à s'opposer au déplacement du verrou vers sa position fermée lorsque cet état n'est pas détecté.

En pratique, lorsque l'opérateur atteint l'état ainsi indexé et enlève la manivelle, le verrou principal prend sa position fermée et il devient possible d'utiliser un verrou secondaire de cadenassage pour verrouiller le verrou principal et interdire la réintroduction de la manivelle. Le disjoncteur est bloqué dans l'état défini par la position de l'encoche de l'indicateur rotatif. Par contre, si l'opérateur ôte la manivelle alors que le mécanisme n'a pas atteint la position indexée, le verrou principal reste en position ouverte et il n'est pas possible de le cadenasser. Suivant les désirs de l'opérateur, il est possible d'indexer un plus ou moins grand nombre de positions du mécanisme, en faisant varier le nombre d'encoches de l'indicateur rotatif. En pratique, on constate plusieurs types de comportements: certains souhaitent une possibilité de verrouillage dans une seule position - en général la position débrochée -, d'autres préfèrent un verrouillage dans les trois positions débrochée, test et embrochée, d'autres encore souhaitent un verrouillage dans toutes les positions possibles du mécanisme, y compris les positions intermédiaires. Les appareils sont donc équipés en usine pour l'une ou l'autre des possibilités et il n'est plus possible de modifier sur site le mode de fonctionnement.

L'invention a pour premier objet de permettre sur site le choix entre au moins deux modes de fonctionnement pour un même appareillage, de façon fiable, simple et réversible, sans nuire à la compacité du mécanisme d'embrochage.

Ce problème est résolu selon la présente invention par un dispositif de verrouillage d'un mécanisme réversible d'embrochage et de débrochage destiné à être entraîné par un organe de manoeuvre amovible pour un appareillage de commutation à sectionnement par débrochage susceptible d'être placé dans plusieurs états, par exemple un état dit « débroché » et un état dit « embroché », ce dispositif comprenant: un verrou principal comportant un organe mobile apte à prendre une position dite fermée dans laquelle il interdit le montage de l'organe de manoeuvre et une position dite ouverte dans laquelle il autorise le montage de l'organe de manoeuvre; et un premier moyen de commande du verrou principal auquel sont associés un ou plusieurs desdits états de l'appareillage et apte, lorsqu'il est dans un état actif, à déterminer si l'appareillage ne se trouve pas dans l'un desdits états associés et à interdire dans ce cas le passage de l'organe mobile du verrou principal dans sa position fermée, le premier moyen de commande du verrou principal étant apte à passer de manière réversible dudit état actif à un état passif dans lequel il ne peut pas interdire le passage de l'organe mobile du verrou principal dans sa position fermée, le dispositif comportant en outre un sélecteur de mode de fonctionnement comportant un organe de sélection apte à passer réversiblement d'une première position dans laquelle il est apte à maintenir le premier moyen de commande dans son état actif pendant l'ensemble d'un cycle d'embrochage et de débrochage, à une deuxième position dans laquelle il est apte à maintenir le premier moyen de commande dans son état passif, pendant l'ensemble d'un cycle d'embrochage et de débrochage.

Selon un mode particulièrement avantageux, le dispositif comporte en outre un deuxième moyen de commande du verrou principal, auquel sont associés un ou plusieurs desdits états de l'appareillage dont l'un au moins diffère des états associés au premier moyen de commande. Ce deuxième moyen de commande est apte, lorsqu'il est dans un état actif, à déterminer si l'appareillage ne se trouve pas dans l'un des états associés à ce deuxième moyen de commande et à interdire dans ce cas le passage de l'organe mobile du verrou principal dans sa position fermée. De plus, il est apte à passer de manière réversible dudit état actif à un état passif, dans lequel il ne peut pas interdire le passage de l'organe mobile du verrou principal dans sa position fermée. L'organe de sélection du sélecteur de mode de fonctionnement dans sa première position est apte en outre à maintenir le deuxième moyen de commande dans son état passif, pendant l'ensemble d'un cycle d'embrochage et de débrochage et, dans une deuxième position, est apte en outre à maintenir le deuxième moyen de commande dans son état actif, pendant l'ensemble d'un cycle d'embrochage et de débrochage. Ceci permet le choix entre deux séquences indexées alternatives. En pratique, un état unique de l'appareillage, préférentiellement l'état « débroché », sera associé au premier moyen de commande, alors que les trois états « embroché », « test » et « débroché » seront associés au deuxième moyen de commande.

Avantageusement, les premier et deuxième moyens de commande du verrou principal comportent chacun une came d'indexation dont la position est représentative des états du disjoncteur et un élément associé apte à prendre sur la came correspondante une information représentative du ou des états associés au moyen de commande correspondant. Cette came peut être rotative, notamment dans le cas où elle est fixée à un élément de la chaîne cinématique de transmission. Elle peut être également une glissière sensiblement rectiligne à encoches ou saillies, fixée à un élément mobile en translation par rapport au support du verrou principal, dont le mouvement est représentatif des différents états de l'appareillage.

Un fonctionnement particulièrement simple et précis est obtenu lorsque l'organe de sélection, dans sa première position comme dans sa deuxième position, est solidaire de l'organe mobile du verrou principal et lorsque l'élément associé de chacun des premier et deuxième moyens de commande est un levier comprenant: une surface de sélection apte, dans l'état actif du moyen de commande correspondant, à coopérer avec l'organe de sélection de façon à ce que le déplacement de l'organe mobile du verrou principal de sa position ouverte à sa position fermée entraîne le levier en pivotement; et une surface de détection apte à coopérer avec la came correspondante et à y prendre ladite information représentative du ou des états associés au moyen de commande correspondant.

Avantageusement, pour la simplicité du montage et la réduction du nombre de pièces, les leviers ont un axe de pivotement commun.

Un fonctionnement particulièrement fiable est obtenu lorsque le sélecteur de mode de fonctionnement comprend des moyens de rappel destinés à rappeler le premier et le deuxième moyens de commande vers leur état passif, l'organe de sélection étant apte, dans sa première position, à maintenir le premier moyen de commande dans son état actif contre l'action des moyens de rappel et, dans une deuxième position, à maintenir le deuxième moyen de commande dans son état actif contre l'action des moyens de rappel. Avantageusement, les moyens de rappel rappellent les leviers en rotation dans un sens éloignant leur surface de détection de la came. Ces moyens de rappel peuvent comprendre par exemple un ressort pour chaque levier, bandé entre le levier et l'organe mobile du verrou principal. Selon une autre variante comportant un ressort unique, celui-ci est bandé entre les deux leviers et tend à les éloigner l'un de l'autre.

Avantageusement, le dispositif comporte un verrou secondaire apte à prendre une position verrouillée dans laquelle il verrouille le verrou principal dans sa position fermée et une position déverrouillée. Dans ce cas, le verrou principal, lorsqu'il est dans sa position ouverte, verrouille le verrou secondaire dans sa position déverrouillée. Ce verrou secondaire peut être un verrou de cadenassage comportant un oeillet destiné à coopérer avec un cadenas. Alternativement, il peut s'agir d'un verrouillage secondaire à serrure, le verrou principal en position ouverte étant apte à interdire l'insertion ou la rotation de la clef dans la serrure. Enfin, le dispositif peut combiner plusieurs verrous secondaires des types précédents.

Un fonctionnement particulièrement simple est obtenu lorsque l'organe mobile du verrou principal est rappelé vers sa position fermée par un moyen de rappel élastique et comprend une rampe destinée à coopérer avec l'organe de manoeuvre de façon à déplacer l'organe mobile vers sa position ouverte contre l'action du moyen de rappel élastique. Dans ce cas, le déplacement de l'organe mobile du verrou principal de sa position ouverte vers sa position fermée a lieu lorsqu'une double condition est réalisée: d'une part il est nécessaire que l'appareillage soit dans un des états indexé; d'autre part, il est nécessaire que l'organe de manoeuvre ait été démonté. Inversement, le retour de l'organe mobile vers sa position ouverte a lieu quand, le verrou secondaire étant le cas échéant déverrouillé, l'on monte l'organe de manoeuvre, ce qui entraîne sa coopération avec la rampe de l'organe mobile et le déplacement de celui-ci.

Pour accroître la compacité et l'intégration de l'ensemble, le dispositif peut être intégré au mécanisme réversible d'embrochage et de débrochage qui comprend en outre une chaîne cinématique de transmission susceptible d'être entraînée par l'organe de manoeuvre, d'amener l'appareillage au moins dans lesdits états, cette chaîne cinématique comprenant des moyens de connexion mécanique destinés à coopérer avec des moyens complémentaires de l'organe de manoeuvre de façon à ce que celui-ci puisse être monté et démonté et, lorsqu'il est monté, entraîner la chaîne cinématique. Dans ce cas, il suffit que l'organe mobile du verrou principal dans sa position fermée interdise l'accès aux moyens de connexion et l'autorise dans le cas contraire.

L'invention s'applique de manière privilégiée aux mécanismes dont la chaîne cinématique de transmission est motrice à la fois entre l'état débrochée et l'état test puis entre l'état test et l'état embroché. Pour ce type de mécanisme, on définit classiquement trois positions de la chaîne cinématique de transmission, à savoir une position « embrochée » correspondant à l'état embroché de l'appareillage de commutation, une position intermédiaire de « test » correspondant à l'état test de l'appareillage de commutation, et une position « débrochée» correspondant à l'état débroché de l'appareillage de commutation. A cette catégorie appartiennent classiquement les disjoncteurs mobiles sur des glissières portées par un châssis et se déplaçant uniformément en translation sous l'effet de la chaîne cinématique de transmission mue par la manivelle, entre la position débrochée et la position test, puis entre la position test et la position embrochée. En font également partie les disjoncteurs du type décrit dans le document EP-A-0 236 179 déjà cité, pour lesquels l'enfichage et la déconnexion des circuits auxiliaires se font à l'aide de la chaîne cinématique de transmission actionnée par la manivelle, mais sans entraîner de déplacement du corps du disjoncteur par rapport au châssis.

L'invention est également applicable aux appareillages plus simples pour lesquels la chaîne cinématique de transmission permet de faire passer le disjoncteur entre les deux états «test» et « embroché » et est découplé entre la position « débroché » à la position « test », le déplacement du disjoncteur se faisant par simple poussée sur le corps de celui-ci. Un tel système est décrit par exemple dans le document US-A-4 020 301.

Pour assurer la précision du positionnement des éléments du mécanisme et la compacité de l'ensemble, il est avantageux de leur prévoir un support commun. Ainsi la chaîne cinématique de transmission comporte préférentiellement un arbre primaire guidé en rotation et fixé en translation par rapport à un support, l'une des extrémités de cet arbre primaire comportant les moyens de connexion mécanique à la manivelle, l'organe mobile du verrou principal étant guidé par rapport au support et les leviers ayant leur axe de pivotement fixé au support. Le support peut être fixe par rapport au châssis de l'appareillage, comme décrit dans EP-A-0 236 179, par rapport au corps de l'appareillage, ou par rapport à un élément intermédiaire solidaire par exemple d'une des glissières d'embrochage, comme il est décrit dans le document US-A-4 020 301.

Pour éviter les problèmes de casse sans avoir à sur-dimensionner les pièces du mécanisme, il est avantageux que chacune des cames soit solidaire d'un élément de la chaîne cinématique de transmission, en particulier d'un élément autre que l'arbre primaire. Cet emplacement est particulièrement avantageux lorsque est inséré dans la chaîne cinématique de transmission, au niveau de l'arbre primaire, un dispositif limiteur de couple. Dans ce cas, cette disposition en aval de l'arbre primaire permet qu'un couple trop important appliqué à l'arbre primaire ne soit pas transmis aux pièces du mécanisme selon l'invention, ce qui évite tout risque de détérioration.

D'autres avantages et caractéristiques de l'invention ressortiront de la description qui va suivre de différents modes de réalisation de l'invention, donné à titre d'exemples non limitatifs et représentés aux dessins annexés dans lesquels:
- la figure 1 représente une vue en perspective du châssis fixe d'un disjoncteur embrochable, muni d'un dispositif selon un premier mode de réalisation de l'invention.
- la figure 2 représente une vue en perspective du dispositif sur son support;
- la figure 3a représente une vue en coupe montrant le verrou principal en position ouverte (haute) et le deuxième moyen de commande dans son état actif, coopérant avec le sélecteur;
- la figure 3b est une vue en coupe montrant le verrou principal en position fermée (basse) et le levier du deuxième moyen de commande dans son état actif, coopérant avec le sélecteur et avec un disque à encoche;
- la figure 4 est une vue en perspective montrant la coopération du verrou principal en position ouverte avec le verrou de cadenassage;
- la figure 5 est une vue en perspective montrant la coopération du verrou principal en position fermée avec le verrou de cadenassage;
- la figure 6 est une vue en coupe montrant le verrou principal en position ouverte et le premier moyen de commande dans son état actif, coopérant avec le sélecteur;
- les figures 7a et 7b sont deux vues en perspective de l'organe de sélection du sélecteur;
- les figures 8a et 8b sont deux vues de coupe dans un plan contenant l'axe du corps de l'organe de sélection et l'axe du cylindre de l'organe de sélection, montrant la coopération de l'organe de sélection avec l'un, et avec l'autre des leviers;
- la figure 9 est une vue en perspective d'un deuxième mode de réalisation de l'invention, dans la position active du sélecteur de mode de fonctionnement;
- la figure 10 est une vue en perspective du deuxième mode de réalisation de l'invention, dans la position passive du sélecteur de mode de fonctionnement;
- la figure 11 est une vue en perspective d'un troisième mode de réalisation de l'invention, dans la position passive du sélecteur de mode de fonctionnement.

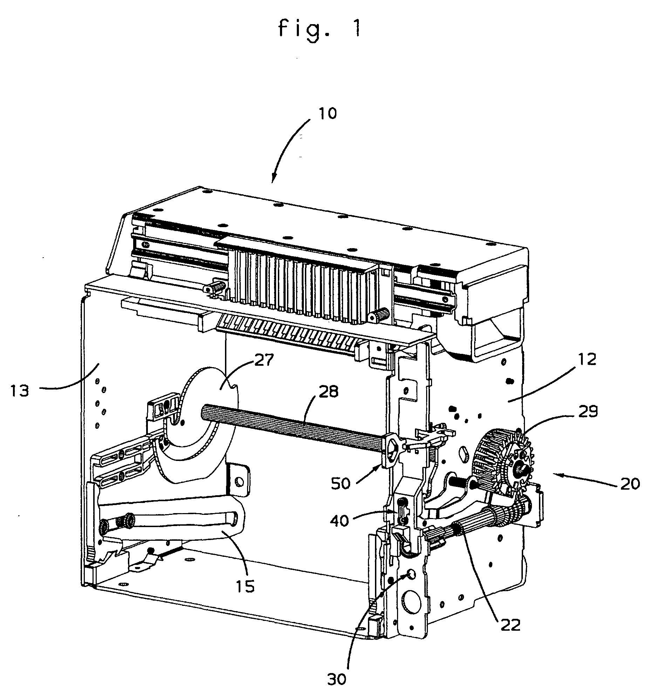

On a représenté en figure 1 une partie d'un châssis 10 constituant la partie fixe d'un disjoncteur sur laquelle vient s'encastrer par mouvement essentiellement axial une partie mobile (non représentée) porteuse des mécanismes de commutation. Ce châssis fixe comporte deux parois latérales 12, 13 qui supportent en rotation un arbre d'embrochage 28 muni de deux cames 27 destinées à coopérer chacune avec des organes d'accouplement de la partie mobile du disjoncteur, de façon à assurer la conversion du mouvement rotatif de l'arbre d'embrochage en mouvement essentiellement translatif de la partie mobile du disjoncteur par rapport au châssis dans l'axe d'embrochage qui est perpendiculaire à l'axe de l'arbre 28. L'homme du métier reconnaîtra également sur la figure 1 les glissières d'embrochage 15 servant de support pour la partie mobile du disjoncteur.

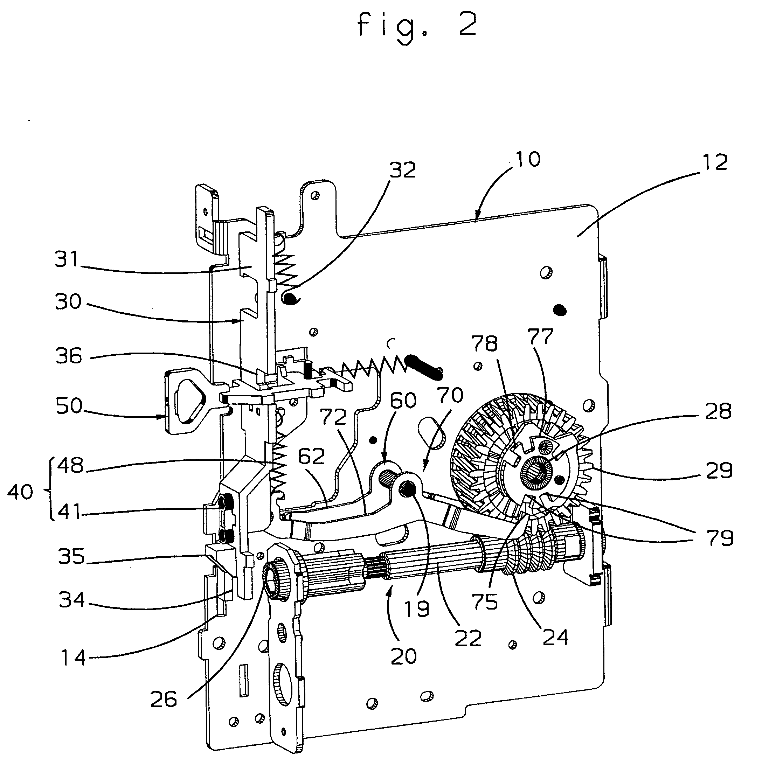

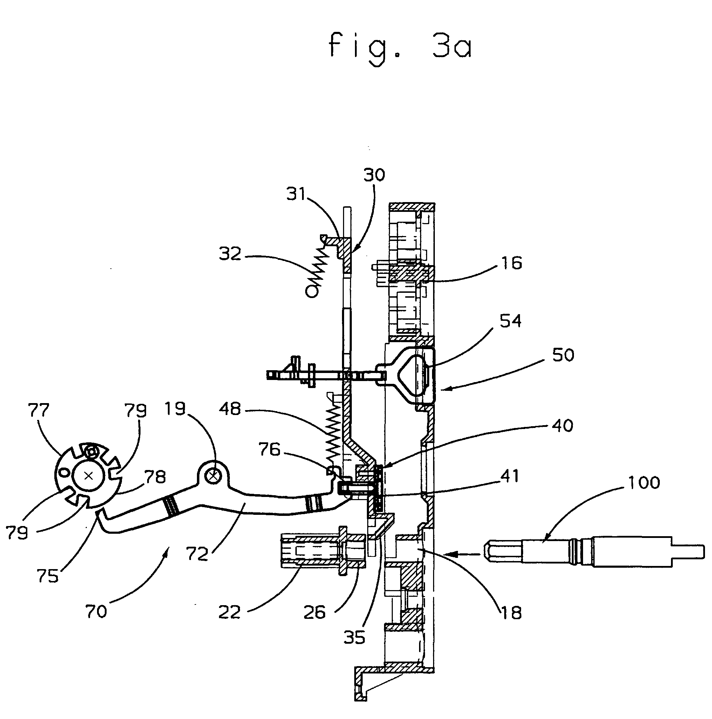

La figure 2 montre plus particulièrement la paroi latérale 12 du châssis 10, qui constitue un organe de support du dispositif de l'invention. L'embrochage et le débrochage du disjoncteur sont effectués par l'intermédiaire d'une chaîne cinématique de transmission 20 comportant un arbre primaire 22 guidé en rotation autour de son axe par rapport à la paroi 12, l'arbre transversal d'embrochage 28 et un mécanisme à vis sans fin dont le filet 24 est solidaire de l'arbre primaire 22 et la roue dentée 29 est solidaire de l'arbre d'embrochage 28. L'arbre primaire 22 comporte à l'une de ses extrémités un trou borgne 26 de section polygonale, destiné à coopérer avec un organe de manoeuvre amovible, dans le cas présent une manivelle 100. Un plastron 16 (cf. figure 3a) de face avant du châssis 10 comporte un orifice 18 à paroi cylindrique dans l'axe de l'arbre primaire 22, faisant face au trou borgne 26.

Le mécanisme d'embrochage comporte en outre un verrou principal 30 avec un tiroir 31 qui coulisse en translation dans des rainures de guidage 14 de la paroi 12 du châssis 10. Le verrou est représenté en figure 1 dans sa position ouverte (haute), qui permet l'insertion de la manivelle au travers d'un passage 34 sous la forme d'une échancrure du tiroir 31 dans le trou borgne 26 de l'arbre primaire 22. La partie supérieure de la paroi du passage 34 se prolonge par une rampe 35.

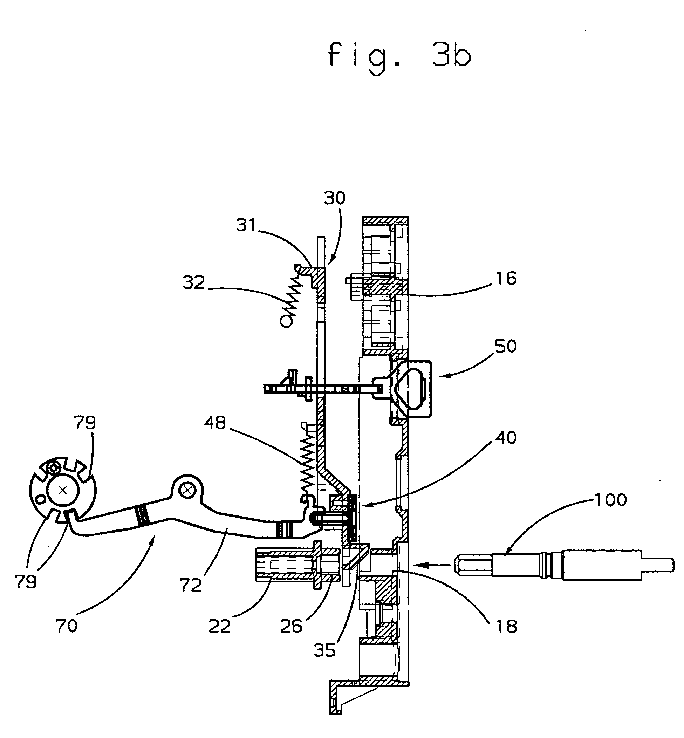

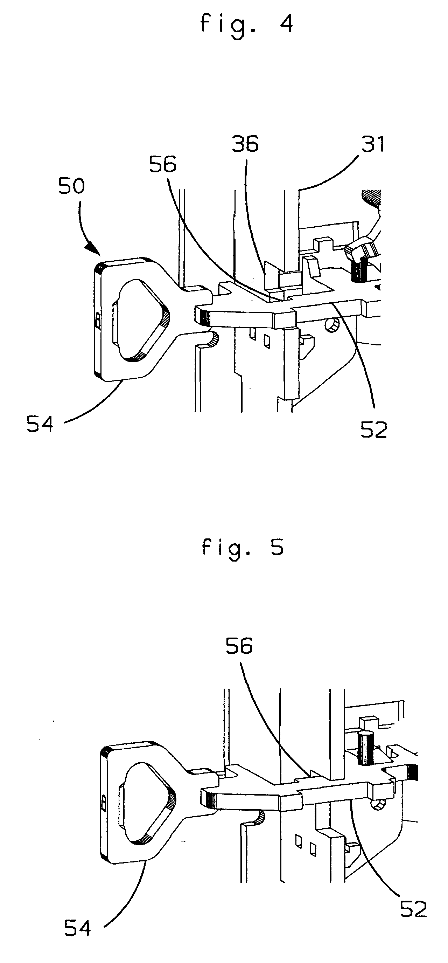

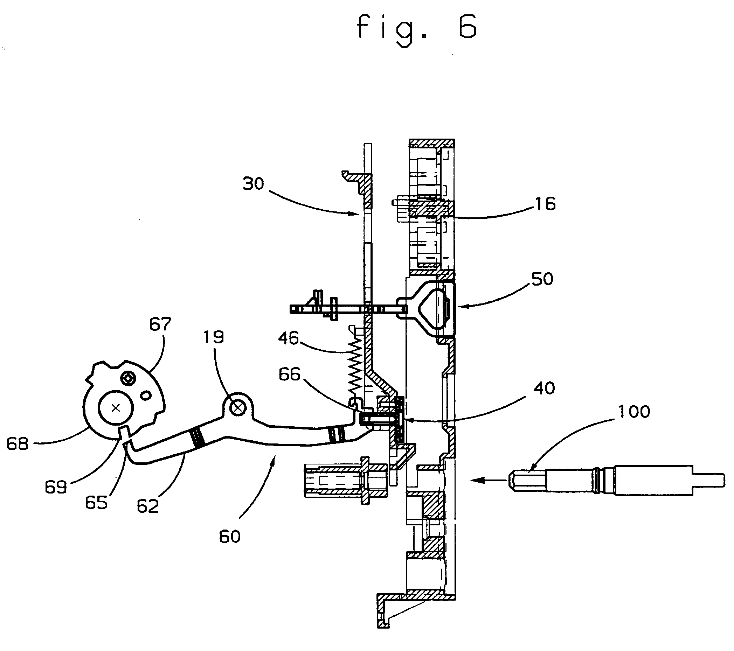

Le verrou principal 30 possède en outre un orifice 36 dont les parois coopèrent avec une encoche 56 (figure 4) de la tige 52 d'un verrou secondaire de cadenassage 50. Dans la position ouverte du verrou principal, représentée aux figures 2, 3a et 4, cette coopération empêche d'extraire le verrou de cadenassage, alors que dans la position fermée du verrou principal, représentée aux figures 3 et 5, cette extraction est possible. Le verrou de cadenassage 50 possède un oeillet 54 servant d'organe de préhension pour son extraction. En position extraite, l'oeillet est destiné à coopérer avec un cadenas conventionnel (non représenté). Le verrou principal est rappelé vers sa position fermée par un ressort 32 fixé à la paroi latérale 12.

Le mécanisme comporte encore un premier système de commande 60 représenté en figure 6 et comportant un levier 62 pivotant autour d'un axe 19 supporté par la paroi 12. L'un des bras du levier 62 a son extrémité conformée en crochet, définissant une surface de détection 65 destinée à coopérer avec la paroi latérale 68 d'une came 67 en forme de disque muni d'une encoche radiale 69. La came 67 d'indexation est solidaire de l'arbre d'embrochage 28. Sa position est donc représentative de la position du mécanisme d'embrochage et par conséquent de l'état du disjoncteur. L'encoche 69 correspond à une position indexée du mécanisme d'embrochage, à savoir : la position « débrochée ». L'autre bras du levier 62 comporte une glissière 66 définissant une surface de coopération avec un sélecteur de mode de fonctionnement 40 solidaire du tiroir 31 du verrou principal 30. Le levier 62 constitue ainsi un élément mobile suiveur prenant sur la came 67 une information représentative de la position du mécanisme d'embrochage.

Le mécanisme comporte également un deuxième système de commande 70 représenté aux figures 3a et 3b, comportant un levier 72 semblable au levier 62 et pivotant autour de l'axe 19. L'un des bras du levier 72 a donc son extrémité conformée en crochet, définissant une surface de détection 75 destinée à coopérer avec la paroi latérale 78 d'une came d'indexation 77 en forme de disque muni de trois encoches radiales 79. Le disque 77 est solidaire de l'arbre d'embrochage. Sa position est donc représentative de la position du mécanisme d'embrochage et par conséquent de l'état du disjoncteur. Les encoches 79 correspondent chacune à une position indexée du mécanisme d'embrochage, à savoir : la position « embrochée », la position «test» et la position « débrochée ». L'autre bras du levier 72 comporte une glissière 76 définissant une surface de coopération avec le sélecteur de mode de fonctionnement 40 solidaire du tiroir 31 du verrou principal 30. Ainsi le levier 72 constitue-t-il également un élément mobile suiveur prenant sur la came 77 une information représentative de la position du mécanisme d'embrochage.

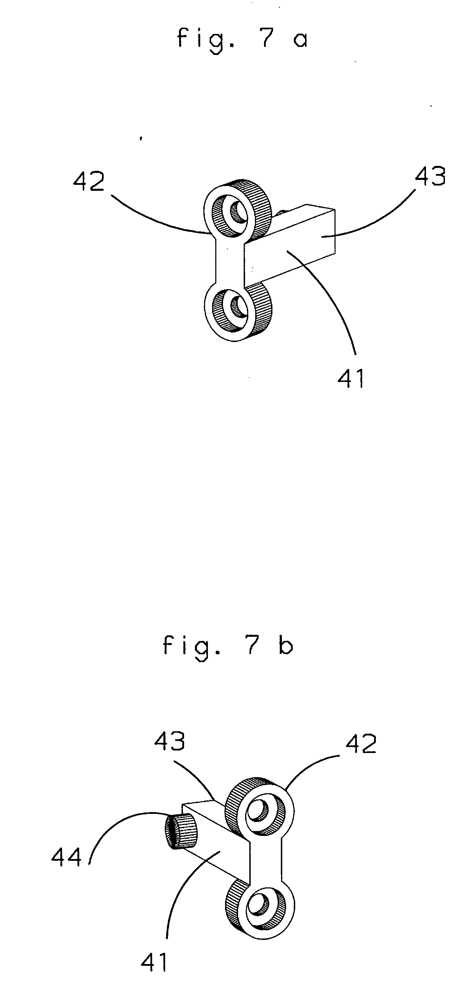

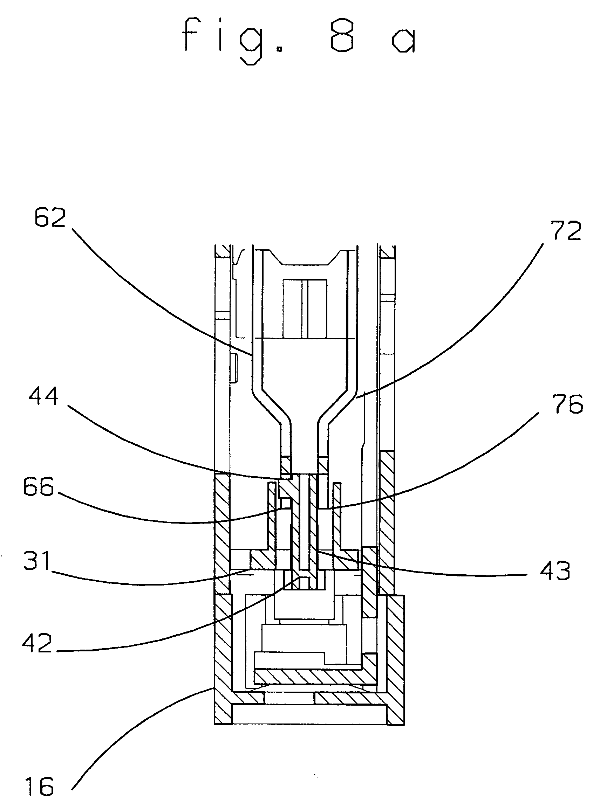

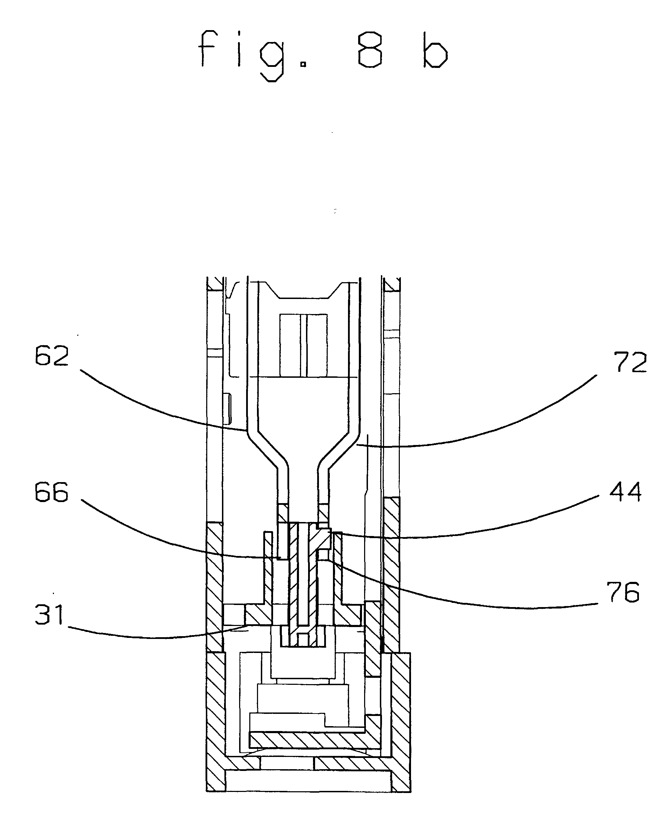

Le sélecteur de mode de fonctionnement 40 dont il a été question plus haut comporte un organe de sélection 41 représenté sur les figures 7a et 7b. Il s'agit d'une pièce en T comportant une tête 42 et un corps 43 dont l'extrémité comporte un cylindre 44. La section droite de la tête 42 dans un plan perpendiculaire à l'axe du corps 43 est symétrique par rapport au plan défini par l'axe du corps 43 et l'axe du cylindre 44. Elle est également symétrique par rapport au plan contenant l'axe du corps 43 et perpendiculaire au plan précédent. Le tiroir 31 du verrou principal 30 comporte un évidement de réception de forme complémentaire à celle de la tête 42 du sélecteur 40, débouchant entre les deux leviers 62 et 72. Le sélecteur peut donc être inséré indifféremment dans deux positions dans l'évidement de réception, à savoir: une position représentée sur la figure 8a, dans laquelle le cylindre 44 pointe vers le levier 62 et coopère avec sa glissière 66 et une position représentée sur la figure 8b, dans laquelle le cylindre 44 pointe vers le levier 72 et coopère avec sa glissière 76.

Le sélecteur 40 comporte également un ressort de rappel 46 (figure 6) fixé entre le levier 62 et le tiroir 31, et un ressort de rappel 48 (figures 2 3a et 3b) fixé entre le levier 72 et le tiroir 31, chacun de ces ressorts rappelant le levier correspondant en rotation de façon à écarter l'un de l'autre le crochet du levier et la came associée.

Le mécanisme fonctionne de la manière suivante:

Pour choisir un mode de fonctionnement lorsque le disjoncteur est en position débrochée, l'opérateur démonte le plastron 16 et accède à la face avant du tiroir 31. Il peut alors insérer le sélecteur 40 dans la position souhaitée - par exemple et pour les besoins de l'explication, dans la position de la figure 8b -, de façon que l'un des leviers - en l'occurrence le levier 72 - coopère avec le sélecteur 40 et soit dans son état dit actif. Le crochet 75 du levier 72 est disposé à l'intérieur de l'encoche 79 correspondant à la position débrochée. Quant au levier 62, il est dans un état dit passif. On entend par là qu'il ne coopère pas avec le sélecteur 40. Il est simplement rappelé par le ressort 46 de façon à éloigner sa surface de détection 65 de la came 67 (dans le sens horaire sur la figure 2). Il reste alors à repositionner le plastron 16.

Dans cette configuration, au repos, le tiroir est rappelé vers sa position fermée parle ressort 32. Le passage 34 n'est donc pas aligné avec l'orifice 18 du plastron et le trou borgne 26 de l'arbre primaire 22. Lorsque la manivelle est insérée dans l'orifice 18, les parois cylindriques de celui-ci assurent le guidage en translation de la manivelle. La manivelle coopère avec la rampe 35 et son insertion provoque la remontée du tiroir 31 vers sa position ouverte, permettant l'alignement de le passage 34 dans l'axe de l'arbre primaire 22 et de l'orifice 18, et le pivotement du levier 72 dans le sens qui provoque le dégagement du crochet 75. Le levier 62 reste quant à lui dans le vide. La manivelle peut donc être insérée dans le trou borgne 26, ce qui permet sa solidarisation en rotation avec l'arbre primaire 22. La présence de la manivelle empêche la redescente du tiroir 31.

La rotation de la manivelle provoque le déplacement du mécanisme vers sa position de test et le changement d'état correspondant du disjoncteur.

Si la manivelle est ressortie alors que le mécanisme se trouve dans une position intermédiaire entre la position débrochée et la position test, l'action du ressort 32 est contrecarrée par le crochet 75 qui vient coopérer avec la paroi 78 hors des encoches 79. Le verrou principal reste en position ouverte, interdisant l'accès au verrou de cadenassage 50. L'opérateur sait alors qu'il ne peut pas verrouiller le mécanisme et qu'il ne peut pas intervenir sur le disjoncteur.

En atteignant la position test, le mécanisme actionne un système de blocage non représenté. Dans cette position, le crochet 75 se trouve à l'aplomb de l'encoche 79 correspondant à la position test. Le levier 72 est donc libre de pivoter dans le sens de la fermeture du tiroir. Ce dernier reste cependant pratiquement en position tant qu'il est en butée contre la manivelle. Si l'on retire la manivelle, le ressort 32 provoque la descente du tiroir 31 et la rotation du levier 72 dans le sens anti-horaire, le crochet 75 entrant dans l'encoche correspondante. L'opérateur qui veut travailler sur le disjoncteur pourra extraire l'oeillet 54 du verrou de cadenassage 50, y insérer un cadenas conventionnel (non représenté) et assurer ainsi le verrouillage du tiroir 31 en position fermée, interdisant l'insertion de la manivelle. Le disjoncteur est alors verrouillé en position test, même si l'opérateur libère le système de blocage non représenté. Ce n'est qu'après avoir ôté le cadenas et rétracté le verrou de cadenassage 50 qu'il deviendra possible d'insérer de nouveau la manivelle 100. Alternativement au verrou de cadenassage 50, l'opérateur peut également avec le même effet utiliser une serrure (non représentée) coopérant avec le tiroir 31.

Le fonctionnement est identique dans une position intermédiaire entre la position test et la position embrochée, puis en atteignant la position embrochée. Il est également identique lors du retrait progressif de la position embrochée, à la position test puis à la position débrochée. Enfin, il est directement transposable dans le cas où l'organe de sélection 41 est disposé de manière à coopérer avec le levier 62 du premier moyen de commande 60. On comprendra que le nombre d'encoches présenté dans cet exemple de réalisation n'est pas limitatif. L'homme du métier pourra varier à la fois l'emplacement des encoches, c'est à dire le choix des états indexés du disjoncteur, et le nombre d'encoches, donc le nombre d'états indexés.

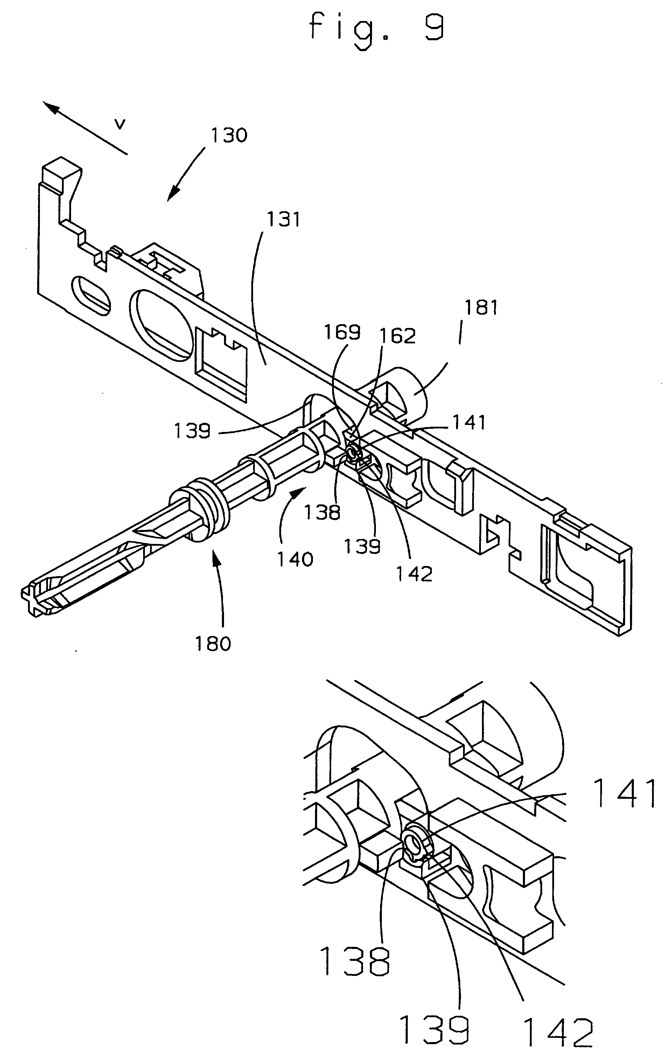

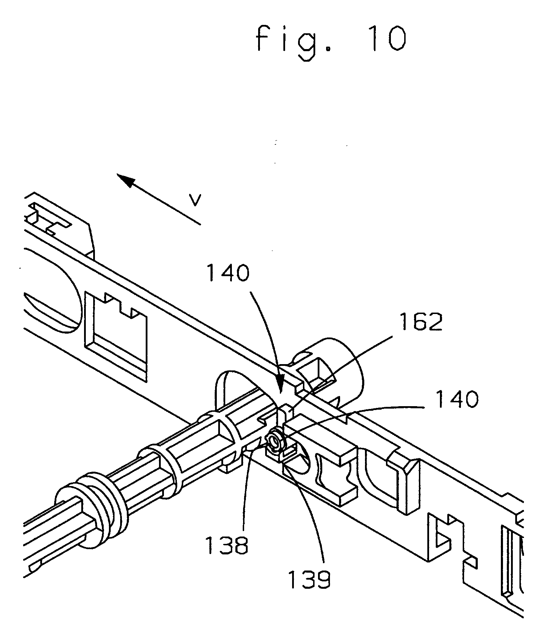

Les figures 9 et 10 représentent un deuxième mode de réalisation de l'invention. De manière analogue au mode de réalisation précédent, l'organe mobile 131 du verrou principal 130 coulisse de manière à venir obturer l'accès de la manivelle (non représentée). Il est en outre, de manière analogue au mode de réalisation précédent, toujours sollicité par un ressort vers sa position fermée, dans le sens de la flèche V. L'organe mobile 131 supporte en rotation l'axe 141 d'un sélecteur de position 140. Cet axe 141 comporte deux aspérités 142 à 90° l'une de l'autre, qui peuvent tour à tour coopérer avec une gorge 138 portée par une patte 139 de l'organe mobile 131 du verrou 130. Lorsqu'une des aspérités 142 est en prise avec la gorge 138, l'axe 141 est fixé en rotation dans la position correspondante.

Le dispositif comprend en outre un indicateur d'état 180 du disjoncteur, qui comprend une tige rotative 181. De manière analogue au dispositif décrit dans EP-A-0 236 179, dont le descriptif du dispositif indicateur est inclus ici par référence, cette tige est entraînée en rotation par un élément solidaire d'un des éléments de la chaîne cinématique de transmission destinée à amener le disjoncteur dans ses différents états. Sa position angulaire est caractéristique d'une position de la chaîne cinématique de transmission, donc d'un état du disjoncteur. La tige 181 traverse le verrou principal au niveau d'un trou de forme plus ou moins oblongue, permettant au verrou de coulisser librement entre sa position de verrouillage et sa position de déverrouillage, sans entrer en contact prématuré avec la tige 181.

L'axe 141 est solidaire d'une butée 162 en forme de levier, qui peut donc être fixée dans deux positions par rapport au verrou, représentées respectivement aux figures 9 et 10. Dans la position représentée sur la figure 9, dite position active, l'extrémité libre de la butée 162 pointe vers la tige rotative 181 de l'indicateur de position 180. La surface périphérique de la tige 181 comprend deux secteurs cylindriques de part et d'autre d'une encoche 169.

Le dispositif fonctionne de la manière suivante.

Tout d'abord, l'opérateur choisit de placer le sélecteur de mode de fonctionnement dans l'une de ses deux positions. Il lui suffit pour cela d'exercer un effort sur la butée 162 formant levier. La patte 139 se déforme élastiquement et permet la rotation de l'axe 141 puis l'enclipage et le déclipage successif des aspérités 142 dans la gorge 138.

Si l'opérateur a choisi de placer la butée dans sa position active (figure 9), l'opération est la suivante. Lorsque l'appareillage n'est pas dans sa position débrochée, l'encoche 169 ne se trouve pas en face de l'extrémité libre de la butée 162. Par conséquent, la butée 162 bute contre la surface périphérique cylindrique de la tige 181. La translation de l'organe mobile 131 du verrou 130 dans le sens du verrouillage est ainsi bloquée: le verrou principal reste en position ouverte. Lorsque l'appareil arrive en position débrochée, l'encoche 169 s'aligne avec l'extrémité libre de la butée 162. Si l'on ôte alors la manivelle, l'organe mobile 131, soumis à la sollicitation du ressort de rappel du verrou 130, coulisse dans le sens de la flèche V jusqu'à atteindre sa position fermée. La butée 162 se trouve alors dans l'encoche 169. Il est possible de verrouiller le verrou principal en position à l'aide d'un verrou secondaire, de manière analogue au mode de réalisation précédent.

Si par contre l'opérateur a choisi de fixer la butée dans sa position passive (figure 10), l'organe mobile 131 est libre de coulisser dans le sens de la flèche V jusqu'à ce que le rebord de l'orifice 139 entre en butée contre la tige 181, ceci dès que la manivelle a été ôtée. Il est alors possible de verrouiller le verrou principal en position fermée à l'aide du verrou secondaire, ceci dans tout état intermédiaire du disjoncteur.

Ainsi, dans ce mode de réalisation, le sélecteur de mode de fonctionnement 140 comprend l'axe 141, les aspérités 142 et la gorge 138 de la patte 139. Le moyen de commande 160 comporte quant à lui la butée 162 et la partie de la tige 181 qui est susceptible de coopérer avec la butée 162.

Il est naturellement possible de modifier ce dispositif de manière à ce que la deuxième position du sélecteur de mode de fonctionnement corresponde elle aussi à des positions de verrouillage indexées et non à une infinité de position de verrouillage. Il suffit pour cela de prévoir, solidarisée à l'axe du sélecteur, une seconde butée disposé axialement à distance de la première et radialement à un angle suffisant, par exemple 90°, de sorte que lorsque l'axe est tourné de manière à ce que la seconde butée pointe vers la tige, une aspérité de l'axe du sélecteur viennent en coopération avec l'encoche de la patte de l'organe mobile du verrou. L'axe de l'indicateur de position doit également être conformé de façon à ce que cette seconde butée puisse coopérer avec une seconde série d'encoches d'indexation pratiquées dans la surface périphérique cylindrique de l'axe de l'indicateur de position.

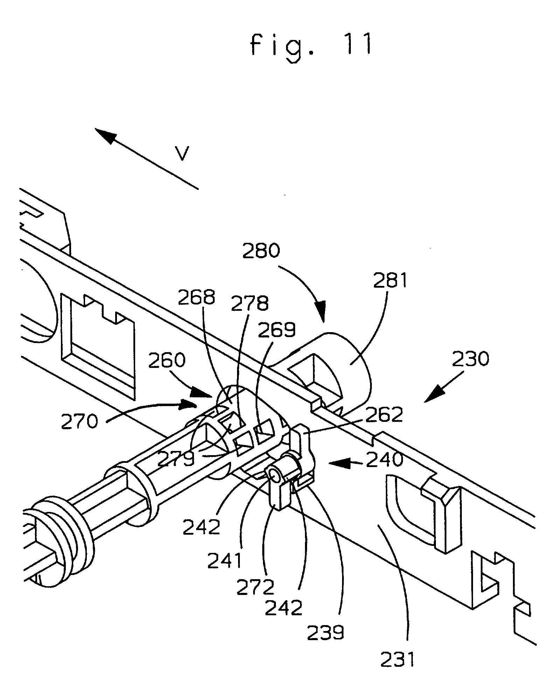

On peut également cumuler les trois modes de fonctionnement, comme le montre le mode de réalisation de la figure 11. On a représenté la tige 281 d'un indicateur d'état de l'appareillage 280. Cette tige comporte une première came comportant une paroi latérale 278 munie d'une encoche unique 269, et une deuxième came comportant une paroi latérale cylindrique 278, munie de trois encoches 279. Le sélecteur de mode de fonctionnement 240 comporte un axe rotatif 241 supporté par un tiroir 231 d'un verrou principal 230, cet axe 241 étant muni d'aspérités 242 placées à 90° les unes des autres, au nombre de trois, deux étant visibles sur la figure 11. L'axe 261 est solidaire de deux butées à 180° l'une de l'autre: la butée 262 susceptible de coopérer avec la came formée par la surface 268 et l'encoche 269 et formant avec cette came le premier moyen de commande 260, et la butée 272 susceptible de coopérer avec la came formée par la surface 278 et les encoches 279 et constituant avec cette came le deuxième moyen de commande 270. L'axe 241 peut prendre trois positions indexées par la coopération des aspérités 242 avec une patte 239 du tiroir 231, portant une gorge analogue à la gorge 138: une première position dans laquelle la butée 262 pointe vers la tige 281; une deuxième position intermédiaire représentée sur la figure, dans laquelle aucune des butées n'est susceptible d'interférer avec la tige 281; et une position dans laquelle la butée 272 pointe vers la tige 281. Pour le reste, le fonctionnement de ce mode de réalisation est analogue à celui du mode des figures 9 et 10.

Dans les modes de réalisation décrits, l'organe sur lequel est pris l'information représentative de l'état de l'appareil est un organe rotatif. Ceci facilite la réalisation, notamment lorsque l'on prend cette information sur la chaîne cinématique d'embrochage. Il est toutefois envisageable de prévoir de prendre cette information sur un organe mobile en translation. Cette solution devient notamment intéressante lorsque le dispositif de verrouillage de l'accès à la manivelle se trouve sur la partie mobile de l'appareillage de commutation, comme décrit par exemple dans le document US-A-5 337 210, ce qui permet de prévoir une tige plongeur qui bute contre une contrebutée du châssis et dont la translation est représentative de la translation de la partie mobile de l'appareillage de commutation dans le châssis.

## Revendications

1. Dispositif de verrouillage d'un mécanisme réversible d'embrochage et de débrochage destiné à être entraîné par un organe de manoeuvre amovible (100) pour un appareillage de commutation à sectionnement par débrochage susceptible d'être placé dans plusieurs états, par exemple un état dit « débroché » et un état dit « embroché », ce dispositif comprenant: un verrou principal (30, 130, 230) comportant un organe mobile (31, 131, 231) apte à prendre une position dite fermée dans laquelle il interdit le montage de l'organe de manoeuvre et une position dite ouverte dans laquelle il autorise le montage de l'organe de manoeuvre; et un premier moyen de commande (60, 160, 260) du verrou principal (30, 130, 230) auquel sont associés un ou plusieurs desdits états de l'appareillage et apte, lorsqu'il est dans un état actif, à déterminer si l'appareillage ne se trouve pas dans l'un desdits états associés et à interdire dans ce cas le passage de l'organe mobile (31, 131, 231) du verrou principal (30, 130, 230) dans sa position fermée, caractérisé en ce que le premier moyen de commande du verrou principal (30, 130, 230) est apte à passer de manière réversible dudit état actif à un état passif dans lequel il ne peut pas interdire le passage de l'organe mobile (31, 131, 231) du verrou principal (30,130, 230) dans sa position fermée et en ce qu'il comporte en outre un sélecteur de mode de fonctionnement (40, 140, 240) comportant un organe de sélection (41, 141, 241) apte à passer réversiblement d'une première position dans laquelle il est apte à maintenir le premier moyen de commande (60, 160, 260) dans son état actif pendant l'ensemble d'un cycle d'embrochage et de débrochage, à une deuxième position dans laquelle il est apte à maintenir le premier moyen de commande (60, 160, 260) dans son état passif, pendant l'ensemble d'un cycle d'embrochage et de débrochage.

2. Dispositif selon la revendication 1, caractérisé en ce qu'il comporte en outre un deuxième moyen de commande (70, 270) du verrou principal (30, 230), auquel sont associés un ou plusieurs desdits états de l'appareillage dont l'un au moins diffère des états associés au premier moyen de commande (60, 260) et apte, lorsqu'il est dans un état actif, à déterminer si l'appareillage ne se trouve pas dans l'un des états associés à ce deuxième moyen de commande et à interdire dans ce cas le passage de l'organe mobile (31, 231) du verrou principal (30, 230) dans sa position fermée, le deuxième moyen de commande (70, 270) du verrou principal (30, 230) étant apte à passer de manière réversible dudit état actif à un état passif dans lequel il ne peut pas interdire le passage de l'organe mobile (31, 231) du verrou principal (30, 231) dans sa position fermée et en ce que l'organe de sélection (41, 241) du sélecteur de mode de fonctionnement (40, 241) dans sa première position est apte en outre à maintenir le deuxième moyen de commande (70, 270) dans son état passif, pendant l'ensemble d'un cycle d'embrochage et de débrochage et, dans une deuxième position, est apte en outre à maintenir le deuxième moyen de commande (70, 270) dans son état actif, pendant l'ensemble d'un cycle d'embrochage et de débrochage.

3. Dispositif selon la revendication 2, caractérisé en ce que les premier (60, 260) et deuxième (70, 270) moyens de commande du verrou principal (30) comportent chacun une came d'indexation (67, 77) dont la position est représentative des états du disjoncteur et un élément associé (62, 72, 262, 272) apte à prendre sur la came correspondante une information représentative du ou des états associés au moyen de commande correspondant.

4. Dispositif selon la revendication 3, caractérisé en ce que l'organe de sélection (41), dans sa première position comme dans sa deuxième position, est solidaire de l'organe mobile (31) du verrou principal (30), en ce que l'élément associé de chacun des premier (60) et deuxième (70) moyens de commande est un levier (62, 72) comprenant: une surface de coopération (66, 76) apte, dans l'état actif du moyen de commande correspondant, à coopérer avec l'organe de sélection (41) de façon à ce que le déplacement de l'organe mobile (31) du verrou principal (30) de sa position ouverte à sa position fermée entraîne le levier (62, 72) en pivotement; et une surface de détection (65, 75) apte à coopérer avec la came (67, 77) correspondante et à y prendre ladite information représentative du ou des états associés au moyen de commande correspondant.

5. Dispositif selon l'une quelconque des revendications 2 à 4, caractérisé en ce que le sélecteur de mode de fonctionnement (40) comprend des moyens de rappel (46, 48) destinés à rappeler le premier (60) et le deuxième (70) moyens de commande (60) vers leur état passif, l'organe de sélection (41) étant apte, dans sa première position, à maintenir le premier moyen de commande (60) dans son état actif contre l'action des moyens de rappel (46, 48) et, dans une deuxième position, à maintenir le deuxième moyen de commande (70) dans son état actif contre l'action des moyens de rappel (46, 48).

6. Dispositif selon l'une quelconque des revendications précédentes caractérisé en ce qu'il comporte au moins un verrou secondaire (50) apte à prendre une position verrouillée dans laquelle il verrouille le verrou principal (30) dans sa position fermée et une position déverrouillée, et en ce que le verrou principal (30), lorsqu'il est dans sa position ouverte, verrouille le verrou secondaire (50) dans sa position déverrouillée.

7. Dispositif selon l'une quelconque des revendications précédentes caractérisé en ce que l'organe mobile (31) du verrou principal (30) est rappelé vers sa position fermée par un moyen de rappel élastique (32) et comprend une rampe (35) destinée à coopérer avec l'organe de manoeuvre de façon à déplacer l'organe mobile (31) vers sa position ouverte contre l'action du moyen de rappel élastique (32).

8. Mécanisme réversible d'embrochage et de débrochage destiné à être entraîné par un organe de manoeuvre amovible (100), pour un appareillage de commutation à sectionnement par débrochage susceptible d'être placé dans plusieurs états, par exemple un état dit « débroché » et un état dit « embroché », caractérisé en ce qu'il comprend: un dispositif de verrouillage selon l'une quelconque des revendications 1 à 7, une chaîne cinématique de transmission (20) susceptible d'être entraînée par l'organe de manoeuvre (100) et d'amener ainsi l'appareillage dans lesdits états, cette chaîne cinématique (20) comprenant des moyens de connexion mécanique (26) destinés à coopérer avec des moyens complémentaires de l'organe de manoeuvre (100) de façon à ce que celui-ci puisse être monté et démonté et, lorsqu'il est monté, entraîner la chaîne cinématique (20) et en ce que l'organe mobile (31) du verrou principal (30) dans sa position fermée interdit l'accès aux moyens de connexion (26) alors que dans sa position ouverte, il autorise l'accès aux moyens de connexion (26).

9. Mécanisme réversible d'embrochage et de débrochage destiné à être entraîné par un organe de manoeuvre amovible (100), pour un appareillage de commutation à sectionnement par débrochage susceptible d'être placé dans plusieurs états, par exemple un état dit « débroché » et un état dit « embroché », caractérisé en ce qu'il comprend un dispositif de verrouillage selon la revendication 4 et une chaîne cinématique de transmission (20) susceptible d'être entraînée par l'organe de manoeuvre et d'amener ainsi l'appareillage dans lesdits états, cette chaîne cinématique (20) comprenant des moyens de connexion mécanique (26) destinés à coopérer avec des moyens complémentaires de l'organe de manoeuvre (100) de façon à ce que celui-ci puisse être monté et démonté et, lorsqu'il est monté, entraîner la chaîne cinématique (20) et en ce que l'organe mobile (31) du verrou principal (30) dans sa position fermée interdit l'accès aux moyens de connexion (26) alors que dans sa position ouverte, il autorise l'accès aux moyens de connexion (26), en ce que la chaîne cinématique de transmission comporte un arbre primaire (22) guidé en rotation et fixé en translation par rapport à un support (12), l'une des extrémités de cet arbre primaire (22) comportant lesdits moyens de connexion mécanique (26), en ce que l'organe mobile (31) du verrou principal (30) est guidé par rapport audit support (12) et en ce que les leviers (62, 72) ont leur axe de pivotement fixé audit support (12).

10. Mécanisme selon la revendication 9, caractérisé en ce que chacune des cames (67, 77) est solidaire d'un élément de la chaîne cinématique de transmission (20), en particulier d'un élément autre que l'arbre primaire (22).

## Claims

1. A locking device of a reversible plug-in and disconnection mechanism designed to be driven by a removable operating part (100), for a switchgear apparatus with disconnection by extraction designed to be placed in several states, for example a state called the "disconnected" state and a state called the "plugged-in" state, this device comprising: a main locking catch (30, 130, 230) comprising a mobile element (31, 131, 231) able to take a position called the closed position in which it prevents the operating part from being fitted and a position called the open position in which it enables the operating part to be fitted; and a first operating means (60, 160, 260) of the main locking catch (30, 130, 230) to which means one or more of said states of the switchgear apparatus are associated and able, when it is in an active state, to determine whether the apparatus is not in one of said associated states and in this case to prevent the mobile element (31, 131, 231) of the main locking catch (30, 130, 230) from moving to its closed position, characterized in that the first operating means of the main locking catch (30, 130, 230) is designed to move in reversible manner from said active state to a passive state in which it can not prevent the mobile element (31, 131, 231) of the main locking catch (30, 130, 230) from moving to its closed position, and in that it comprises in addition an operating mode selector (40, 140, 240) comprising a selection means (41, 141, 241) able to move reversibly from a first position in which it is designed to maintain the first operating means (60, 160, 260) in its active state during a complete plug-in and disconnection cycle, to a second position in which it is designed to maintain the first operating means (60, 160, 260) in its passive state during a complete plug-in and disconnection cycle.

2. The device according to claim 1, characterized in that it comprises in addition a second operating means (70,270) of the main locking catch (30, 230), to which one or more of said states of the switchgear apparatus are associated, at least one of which states differs from the states associated to the first operating means (60, 260) and able, when it is an active state, to determine whether the apparatus is not in one of the states associated to this second operating means and in this case to prevent the mobile element (31, 231) of the main locking catch (30, 230) from moving to its closed position, the second operating means (70, 270) of the main locking catch (30, 230) being designed to move in reversible manner from said active state to a passive state in which it can not prevent the mobile part (31, 231) of the main locking catch (30, 230) from moving to its closed position, and in that the selection means (41, 241) of the operating mode selector (40, 240) in its first position is in addition designed to maintain the second operating means (70, 270) in its passive state during a complete plug-in and disconnection cycle and, in a second position, is in addition designed to maintain the second operating means (70, 270) in its active state during a complete plug-in and disconnection cycle.

3. The device according to claim 2, characterized in that the first (60, 260) and second (70, 270) operating means of the main locking catch (30) each comprise an indexing cam (67, 77) whose position is representative of the states of the circuit breaker and an associated element (62, 72, 262, 272) designed to take information representative of the state or states associated to the corresponding operating means from the corresponding cam.

4. The device according to claim 3, characterized in that the selection means (41), both in its first position and in its second position, is securedly united to the mobile element (31) of the main locking catch (30), and that the associated element of each of the first operating means (60) and the second operating means (70) is a lever (62, 72) comprising: a cooperation surface (66, 76) designed, in the active state of the corresponding operating means, to operate in conjunction with the selection means (41) in such a way that movement of the mobile element (31) of the main locking catch (30) from its open position to its closed position drives the lever (62, 72) in pivoting; and a detection surface (65, 75) designed to operate in conjunction with the corresponding cam (67, 77) and to take therefrom said information representative of the state or states associated to the corresponding operating means.

5. The device according to any one of the claims 2 to 4, characterized in that the operating mode selector (40) comprises return means (46, 48) designed to bias the first operating means (60) and the second operating means (70) to their passive state, the selection means (41) being designed, in its first position, to maintain the first operating means (60) in its active state against the action of the return means (46, 48) and, in a second position, to maintain the second operating means (70) in its active state against the action of the return means (46, 48).

6. The device according to any one of the foregoing claims, characterized in that it comprises at least one secondary locking catch (50) designed to take a locked position in which it locks the main locking catch (30) in its closed position and an unlocked position, and that the main locking catch (30), when it is in its open position, locks the secondary locking catch (50) in its unlocked position.

7. The device according to any one of the foregoing claims, characterized in that the mobile element (31) of the main locking catch (30) is biased to its closed position by a flexible return means (32) and comprises a ramp (35) designed to operate in conjunction with the operating part so as to move the mobile element (31) to its open position against the action of the flexible return means (32).

8. A reversible plug-in and disconnection mechanism designed to be driven by a removable operating part (100), for a switchgear apparatus with disconnection by extraction designed to be placed in several states, for example a state called the "disconnected" state and a state called the "plugged-in" state, characterized in that it comprises: a locking device according to any one of the claims 1 to 7, a kinematic transmission system (20) able to be driven by the operating part (100) and thus move the switchgear apparatus to said states, this kinematic transmission system (20) comprising mechanical connection means (26) designed to operate in conjunction with complementary means of the operating part (100) so that the latter can be fitted and removed and, when it is fitted, can drive the kinematic transmission system (20), and that the mobile element (31) of the main locking catch (30) in its closed position prevents access to the connection means (26), whereas in its open position it enables access to the connection means (26).

9. A reversible plug-in and disconnection mechanism designed to be driven by a removable operating part (100), for a switchgear apparatus with disconnection by extraction designed to be placed in several states, for example a state called the "disconnected" state and a state called the "plugged-in" state, characterized in that it comprises: a locking device according to claim 4 and a kinematic transmission system (20) able to be driven by the operating part and thus move the switchgear apparatus to said states, this kinematic transmission system (20) comprising mechanical connection means (26) designed to operate in conjunction with complementary means of the operating part (100) so that the latter can be fitted and removed and, when it is fitted, can drive the kinematic transmission system (20), and that the mobile element (31) of the main locking catch (30) in its closed position prevents access to the connection means (26), whereas in its open position it enables access to the connection means (26), and that the kinematic transmission system comprises a primary shaft (22) guided in rotation and fixed in translation with respect to a support (12), one of the ends of this primary shaft (22) comprising said mechanical connection means (26), and that the mobile element (31) of the main locking catch (30) is guided with respect to said support (12) and that the levers (62, 72) have their pivoting axis fixed to said support (12).

10. The mechanism according to claim 9, characterized in that each of the cams (67, 77) is secured to an element of the kinematic transmission system (20), in particular to an element other than the primary shaft (22).

## Patentansprüche

1. Vorrichtung zur Verriegelung eines zum Antrieb durch ein abnehmbares Betätigungsorgan (100) ausgelegten, umkehrbaren Einfahr- und Ausfahrmechanismus' für ein elektrisches Schaltgerät mit Trennung durch Kontaktabzug, der in mehrere Stellungen, beispielsweise eine als "Einfahrstellung" bezeichnete Stellung und eine als "Ausfahrstellung" bezeichnete Stellung verbracht werden kann, wobei die genannte Vorrichtung einen Hauptriegel (30, 130, 230) mit einem beweglichen Teil (31, 131, 231), das eine sogenannte Schließstellung, in der es das Anbringen des Betätigungsorgans verhindert, sowie eine sogenannte Offenstellung einnehmen kann, in der es das Anbringen des Betätigungsorgans ermöglicht, und ein erstes Steuerungsmittel (60, 160, 260) des Hauptriegels (30, 130, 230) umfaßt, dem eine oder mehrere der genannten Stellungen des elektrischen Schaltgeräts zugeordnet sind und das in einer aktiven Stellung in der Lage ist zu erfassen, ob sich das Schaltgerät nicht in einer der genannten, zugeordneten Stellungen befindet, sowie in diesem Fall die Überführung des beweglichen Teils (31, 131, 231) des Hauptriegels (30, 130, 230) in dessen Schließstellung zu verhindern dadurch gekennzeichnet, daß das erste Steuerungsmittel des Hauptriegels (30, 130, 230) umkehrbar von der genannten aktiven Stellung in eine passive Stellung verbracht werden kann, in der es nicht in der Lage ist, die Überführung des beweglichen Teils (31, 131, 231) des Hauptriegels (30, 130, 230) in dessen Schließstellung zu verhindern, und die Vorrichtung darüber hinaus einen Funktionsartenumsteller (40, 140, 240) mit einem Auswahlelement (41, 141, 241) umfaßt, das umkehrbar von einer ersten Position, in der es in der Lage ist, während eines gesamten Einfahr- und Ausfahrzyklus' das erste Steuerungsmittel (60, 160, 260) in seiner aktiven Stellung zu halten, in eine zweite Position verbracht werden kann, in der es in der Lage ist, während eines gesamten Einfahr- und Ausfahrzyklus' das erste Steuerungsmittel (60, 160, 260) in seiner passiven Stellung zu halten.

2. Vorrichtung nach Anspruch 1, dadurch gekennzeichnet, daß sie darüber hinaus ein zweites Steuerungsmittel (70, 270) des Hauptriegels (30, 230) umfaßt, dem eine oder mehrere der genannten Stellungen des Schaltgeräts zugeordnet sind, von denen mindestens eine von den, dem ersten Steuerungsmittel (60, 260) zugeordneten Stellungen abweicht, und das in seiner aktiven Stellung in der Lage ist zu erfassen, ob sich das Schaltgerät nicht in einer der diesem zweiten Steuerungsmittel zugeordneten Stellungen befindet, sowie in diesem Fall die Überführung des beweglichen Teils (31, 231) des Hauptriegels (30, 230) in dessen Schließstellung zu verhindern, wobei das zweite Steuerungsmittel (70, 270) umkehrbar von der genannten aktiven Stellung in eine passive Stellung verbracht werden kann, in der es nicht in der Lage ist, die Überführung des beweglichen Teils (31, 231) des Hauptriegels (30, 230) in dessen Schließstellung zu verhindern, und daß das Auswahlelement (41, 241) des Funktionsartenumstellers (40, 240) in seiner ersten Position darüber hinaus während eines gesamten Einfahr- und Ausfahrzyklus' das zweite Steuerungsmittel (70, 270) in seiner passiven Stellung sowie in seiner zweiten Position darüber hinaus während eines gesamten Einfahr- und Ausfahrzyklus' das zweite Steuerungsmittel (70, 270) in seiner aktiven Stellung halten kann.

3. Vorrichtung nach Anspruch 2, dadurch gekennzeichnet, daß die ersten (60, 260) und zweiten (70, 270) Steuerungsmittel des Hauptriegels (30) jeweils eine Steuerkurve (67, 77) mit Stellungsindex, deren Position die Stellungen des Leistungsschalters abbildet, sowie ein zugeordnetes Element (62, 72, 262, 272) umfassen, das in der Lage ist, an der entsprechenden Steuerkurve eine Information aufzunehmen, die ein Abbild der dem jeweiligen Steuerungsmittel zugeordnete(n) Stellung(en) darstellt.

4. Vorrichtung nach Anspruch 3, dadurch gekennzeichnet, daß das Auswahlelement (41) sowohl in seiner ersten als auch in seiner zweiten Position mit dem beweglichen Teil (31) des Hauptriegels (30) verbunden und das zugeordnete Element des ersten (60) und des zweiten (70) Steuerungsmittels als Hebel (62, 72) ausgebildet ist, der eine Mitnahmefläche (66, 76), welche in der aktiven Stellung des zugehörigen Steuerungsmittels mit dem Auswahlelement (41) so zusammenwirken kann, daß die Verschiebung des beweglichen Teils (31) des Hauptriegels (30) von seiner Offenstellung in seine Schließstellung ein Verschwenken des Hebels (62, 72) bewirkt, sowie eine Abtastfläche (65, 75) aufweist, die in der Lage ist, mit der zugehörigen Steuerkurve (67, 77) zusammenzuwirken und an dieser die genannte Information aufzunehmen, welche die dem entsprechenden Steuerungsmittel zugeordnete(n) Stellung(en) abbildet.

5. Vorrichtung nach irgendeinem der Ansprüche 2 bis 4, dadurch gekennzeichnet, daß der Funktionsartenumsteller (40) Rückstellmittel (46, 48) aufweist, die dazu dienen, das erste (60) und das zweite (70) Steuerungsmittel jeweils in Richtung ihrer passiven Stellung zu beaufschlagen, wobei das Auswahlelement (41) in der Lage ist, in seiner ersten Position das erste Steuerungsmittel (60) entgegen der Wirkung der Rückstellmittel (46, 48) in dessen aktiver Stellung zu halten, und in einer zweiten Position das zweite Steuerungsmittel (70) entgegen der Wirkung der Rückstellmittel (46, 48) in dessen aktiver Stellung zu halten.

6. Vorrichtung nach irgendeinem der vorhergehenden Ansprüche, dadurch gekennzeichnet, daß sie einen Zusatzriegel (50) umfaßt, welcher eine Verriegelungsstellung, in der er den Hauptriegel (30) in dessen Schließstellung verriegelt, sowie eine Entriegelungsstellung einnehmen kann, und daß der Hauptriegel (30) in seiner Offenstellung den Zusatzriegel (50) in dessen Entriegelungsstellung. verriegelt.

7. Vorrichtung nach irgendeinem der vorhergehenden Ansprüche, dadurch gekennzeichnet, daß das bewegliche Teil (31) des Hauptriegels (30) durch ein elastisches Rückstellmittel (32) in Richtung seiner Schließstellung beaufschlagt wird und eine Schräge (35) aufweist, die dazu dient, mit dem Betätigungsorgan derart zusammenzuwirken, daß das bewegliche Teil (31) entgegen der Wirkung des elastischen Rückstellmittels (32) in Richtung seiner Offenstellung verschoben wird.

8. Zum Antrieb durch ein abnehmbares Betätigungsorgan (100) ausgelegter, umkehrbarer Einfahr- und Ausfahrmechanismus' für ein elektrisches Schaltgerät mit Trennung durch Kontaktabzug, der in mehrere Stellungen, beispielsweise eine als "Einfahrstellung" bezeichnete Stellung und eine als "Ausfahrstellung" bezeichnete Stellung verbracht werden kann, dadurch gekennzeichnet, daß er eine Verriegelungsvorrichtung nach irgendeinem der Ansprüche 1 bis 7 sowie eine kinematische Übertragungskette umfaßt, die über das Betätigungsorgan (100) angetrieben werden und so das Schaltgerät in die genannten Stellungen überführen kann, wobei die kinematische Kette (20) mechanische Verbindungsmittel (26) umfaßt, die dazu dienen, mit Zusatzmitteln des Betätigungsorgans (100) derart zusammenzuwirken, daß dieses Organ eingesteckt und abgezogen werden und im eingesteckten Zustand die kinematische Kette (20) antreiben kann, und daß das bewegliche Teil (31) des Hauptriegels (30) in der Schließstellung den Zugang zu den Verbindungsmitteln (26) verhindert und in der Offenstellung den Zugang zu den Verbindungsmitteln (26) ermöglicht.

9. Zum Antrieb durch ein abnehmbares Betätigungsorgan (100) ausgelegter, umkehrbarer Einfahr- und Ausfahrmechanismus' für ein elektrisches Schaltgerät mit Trennung durch Kontaktabzug, der in mehrere Stellungen, beispielsweise eine als "Einfahrstellung" bezeichnete Stellung und eine als "Ausfahrstellung" bezeichnete Stellung verbracht werden kann, dadurch gekennzeichnet, daß er eine Verriegelungsvorrichtung nach Anspruch 4 sowie eine kinematische Übertragungskette (20) umfaßt, die über das Betätigungsorgan (100) angetrieben werden und so das Schaltgerät in die genannten Stellungen überführen kann, wobei die kinematische Kette (20) mechanische Verbindungsmittel (26) umfaßt, die dazu dienen, mit Zusatzmitteln des Betätigungsorgans (100) derart zusammenzuwirken, daß dieses Organ eingesteckt und abgezogen werden und im eingesteckten Zustand die kinematische Kette (20) antreiben kann, daß das bewegliche Teil (31) des Hauptriegels (30) in dessen Schließstellung den Zugang zu den Verbindungsmitteln (26) verhindert und in der Offenstellung den Zugang zu den Verbindungsmitteln (26) ermöglicht, daß die kinematische Übertragungskette eine in bezug zu einem Stützkörper (12) in Drehrichtung geführte und in Translationsrichtung feststehende Primärwelle (22) umfaßt und an einem der Enden dieser Primärwelle (22) die genannten mechanischen Verbindungsmittel (26) ausgebildet sind, daß das bewegliche Teil (31) des Hauptriegels (30) in bezug zum genannten Stützkörper (12) geführt wird und daß die Schwenkachse der Hebel (62, 72) am genannten Stützkörper (12) befestigt ist.

10. Mechanismus nach Anspruch 9, dadurch gekennzeichnet, daß jede Steuerkurve (67, 77) mit einem Teil der kinematischen Übertragungskette (20), insbesondere mit einem anderen Teil als der Primärwelle (22) fest verbunden ist.
